Europäisches Patentamt

European Patent Office

Office européen des brevets

(11) Publication number: **0 126 653**
**B1**

(12) **EUROPEAN PATENT SPECIFICATION**

(45) Date of publication of patent specification: **10.05.89**

(51) Int. Cl.⁴: **B 01 D 33/06, B 07 B 1/46**

(21) Application number: **84303489.3**

(22) Date of filing: **23.05.84**

(54) Improvements relating to micro-strainers for use in water purification.

(30) Priority: **23.05.83 GB 8314188**
**20.01.84 GB 8401581**

(43) Date of publication of application:
**28.11.84 Bulletin 84/48**

(45) Publication of the grant of the patent:
**10.05.89 Bulletin 89/19**

(84) Designated Contracting States:
**AT BE CH DE FR GB IT LI LU NL SE**

(56) References cited:
**DE-A-3 216 466**
**FR-A-1 109 607**
**GB-A-1 001 166**
**GB-A-1 440 527**
**GB-A-1 513 373**
**US-A-3 747 770**
**US-A-4 222 865**

**BRITISH ENGINEERING & TRANSPORT, vol. 42,
no. 12, July 1960, pages 402-403, Trader
Publishing Co., Ltd., London, GB; "Low-cost
water filtration"**

(73) Proprietor: **PUK WATER TREATMENT LIMITED**
**Unit 11 Whetynton Close, Riverside, Medway
City Estate
Strood, Rochester, Kent ME2 4DP (GB)**

(72) Inventor: **Stone, Frank Herbert**
**"Pinnacles Cottage" 216 Shipbourne Road
Tonbridge Kent (GB)**
Inventor: **Robson, Richard John**
**38 Benenden Road Wainscott
Rochester Kent (GB)**

(74) Representative: **Slight, Geoffrey Charles et al
Graham Watt & Co. Riverhead
Sevenoaks Kent TN13 2BN (GB)**

Courier Press, Leamington Spa, England.

**Description**

The present invention relates to micro-strainers for use in water purification.

Micro-straining units for water purification conventionally comprise a revolving drum into which water to be strained or purified is caused to flow at one open end of the drum, the water then passing through a filtering screen cladding the periphery of the drum. The screen is continuously washed clean of suspended solids, organisms and other materials filtered out by the screen by means of water jets or water sprays directed onto the outside of the screen at the top of the drum, above the free surface of the flow, the solids and other materials washed off the screen being collected by a hopper or hoppers inside the rotating drum, the hoppers exhausting continuously through a stationary pipe arranged along the rotational axis of the drum.

The filtering screen is composed of a micro-straining fabric hitherto woven, most commonly, from stainless steel wires although other micro-straining fabric materials are now beginning to be used. Traditionally, at least in so-called Glenfield Micro-Straining Units, the fabric has never been woven in standard panel widths and jointed directly to external machined surfaces on the outside of a cylindrical drum using cover straps and sealing tapes fixed in position with screws. This is a skilled and time consuming operation which has, necessarily, to be performed and repeated on the units *in situ* from time to time in order to effect repairs to tears which can occur in the fabric, mainly due to fatigue failure of the fabric wires at critical points caused by continual flexing of the fabric under the action of the hydraulic forces in use of the units. Since repairs *in situ* require draining down the tank work, considerable time and effort is involved.

In order to mitigate this problem it is proposed in GB—A—1 513 373 to have the micro-straining fabric sandwiched between multi-windowed plates under factory conditions by gluing and subsequently to fit the sandwiched plates to the revolving drum *in situ*, using screws. Such sandwiched plates, however, present a considerable reduction in the total area of micro-straining fabric exposed for filtering the water.

In FR—A—1 109 607, a construction of micro-straining fabric panel is described having a surrounding frame and protection strips fixed between the panel and the frame to prevent the to-and-fro flexing of the fabric under the action of the hydraulic forces damaging the strands at the edges of the frame.

The present invention aims to provide an improved micro-straining fabric panel which may be manufactured under factory controlled conditions and thereafter readily fitted to the revolving drum of a micro-straining unit *in situ* using relatively unskilled labour, the improvement being directed to reducing the flexing of the fabric in use of the panel due to the hydraulic forces.

Thus, the present invention is a micro-straining fabric panel comprising a rigid frame having micro-fabric stretched on, and attached to, the frame by means of adhesive characterized in that the micro-fabric is held stretched on one side of the frame in both its warp and weft directions and is adhesively united to the whole of its supporting surface of said one side of the frame by means of an uninterrupted band of adhesive extending along the whole of the supporting surface whereby each individual warp and weft of the micro-fabric is embedded in the adhesive and is held thereby under a predetermined tension within its elastic limit at least between its ends.

In this manner, an optimum tension may be achieved in the warps and wefts of the micro-fabric, to combat fatigue failures due to the flexing of the fabric in use of the panel, and this tension is strictly maintained in the finished panel by the continuous adhesive band. At the same time the panel is readily handled and fitted to a micro-straining unit *in situ*.

It is an optional feature of the present invention that the panel is curved in one direction to fit with a cylindrical revolving drum and that the micro-fabric is stretched on and adhered to the convex side of the frame.

Preferably, in a panel of the present invention, the tension in the warps and wefts of the micro fabric is selected to tension the wires substantially, e.g. in the case of the warps, to about one third their breaking strain. Since the warps are straight, or substantially so, the necessary tension is easily determined. In the case of the wefts, there is some suggestion that these tend to straighten under load so that the individual tension of the wires is not so easily determined. Suffice to say that the micro-fabric may be stretched on the frame with equal loading in its warp and weft directions.

In a panel of the present invention the micro-straining fabric is supported under optimum tension to combat fatigue failures and in use of the panel it becomes desirable to ensure that this regime is not substantially interferred with either when attaching the panel to a drum of a micro-straining unit or when revolving the drum, which is conveniently driven from one end.

To this end, the present invention additionally provides a micro-straining unit for water purification comprising a rigid, skeletal, cylindrical drum structure having panels as above defined removably clamped to the outside thereof thereby to form a drum, each panel having the other side of its frame clamped all round to sealing surfaces of the drum structure of a shape corresponding to the shape of the surfaces at said other side of the frame of the panel.

In this fashion, the panels are sealed to the drum structure with intervening sealing strips without distortion, and in so far as the skeletal drum structure is made rigid, the drive to revolve the drum from one end is transmitted through the drum structure without exerting forces on the panel frames tending to distort the panels.

In a preferred form, the drum structure comprises spoked rings, one at each end, a plurality of rigid, axially extending drive transmitting members interconnecting the rings, the drive transmitting members being spaced inwardly from the periphery of the drum structure and carrying, outwardly thereof on spacing members, positioned at discrete, spaced apart locations along the drive transmitting members, a windowed, sheet-form structure presenting, on the outside thereof, said sealing surfaces of the drum structure, said other side of said panels being clamped to the sealing surfaces each along an opposite pair of straight sides of the panel, by clamping forces transmitted to the drive transmitting members through further ones of said spacing members.

The sheet-form structure of the drum allows water to flow through its window openings and through the micro-fabric of the panels without churning so that the hydraulic forces are reduced and substantially streamline filtering flow is achieved. Also, in as far as the window openings may be of a size only a little less than that of the panels, substantially the whole of the micro-fabric of the panels is exposed to direct water flow without impediment.

Specific embodiments of micro-straining units in accordance with the present invention employing micro-straining fabric panels will now be described by way of example, and not by way of limitation, with reference to drawings in which:—

Figure 1 is a plan view of the frame of a panel in accordance with the present invention;

Figure 2 is a cross-section of the frame;

Figure 3 is a partial cross-section on line A—A in Figure 1;

Figure 4 is a cross-section on line B—B in Figure 1 and showing the micro-fabric;

Figure 5 is a diagram;

Figure 6 is an end view, in part in section, of a micro-straining unit according to the present invention;

Figure 7 is a front elevation, in part in section, of the unit shown in Figure 6; and

Figures 8 to 31 show details of construction of the unit as follows:

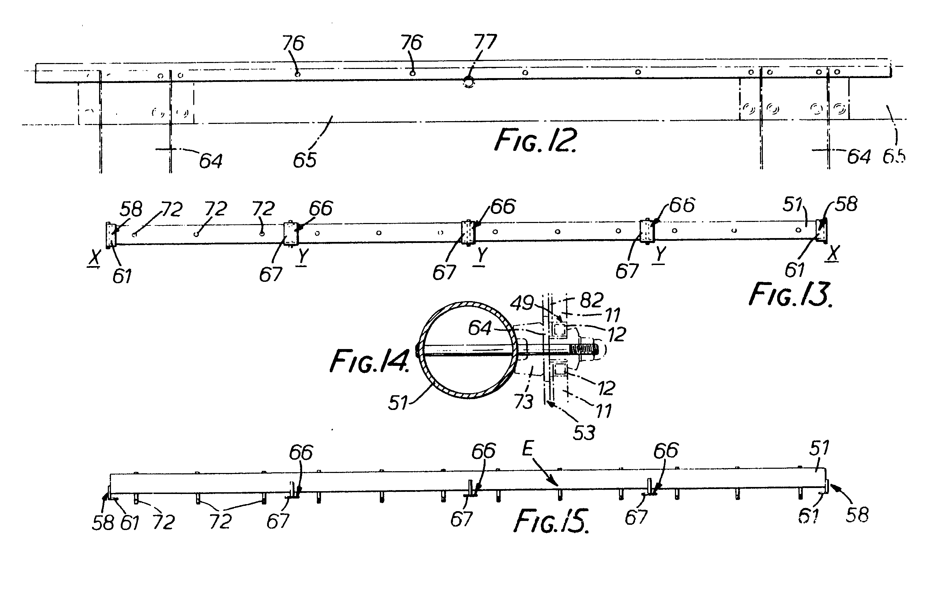

Figure 8 is a front elevation;

Figure 9 is a plan view in Figure 8;

Figure 10 is an end elevation in Figure 8;

Figure 11 is a view of the assembly at A—A in Figure 8;

Figure 12 is a flattened plan view showing screw fixing centres;

Figure 13 is a plan view of a drive transmitting member;

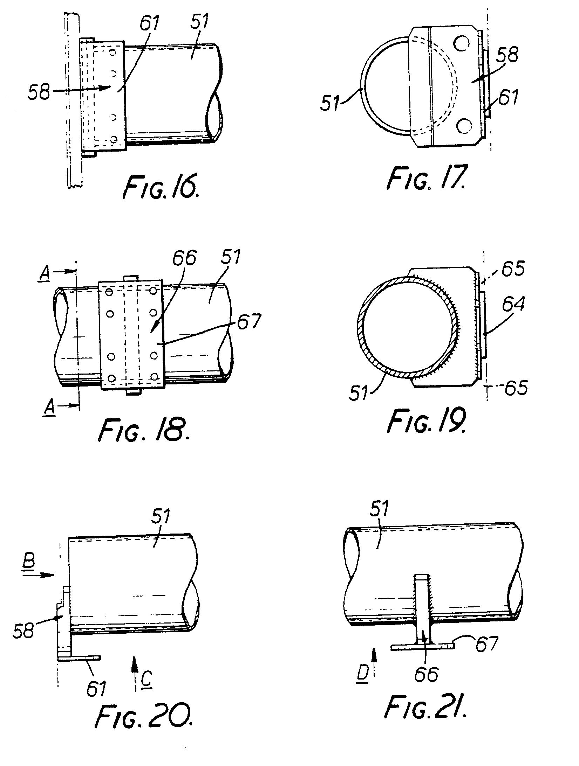

Figure 14 shows the detail E in Figure 15;

Figure 15 is a side view of the member shown in Figure 13;

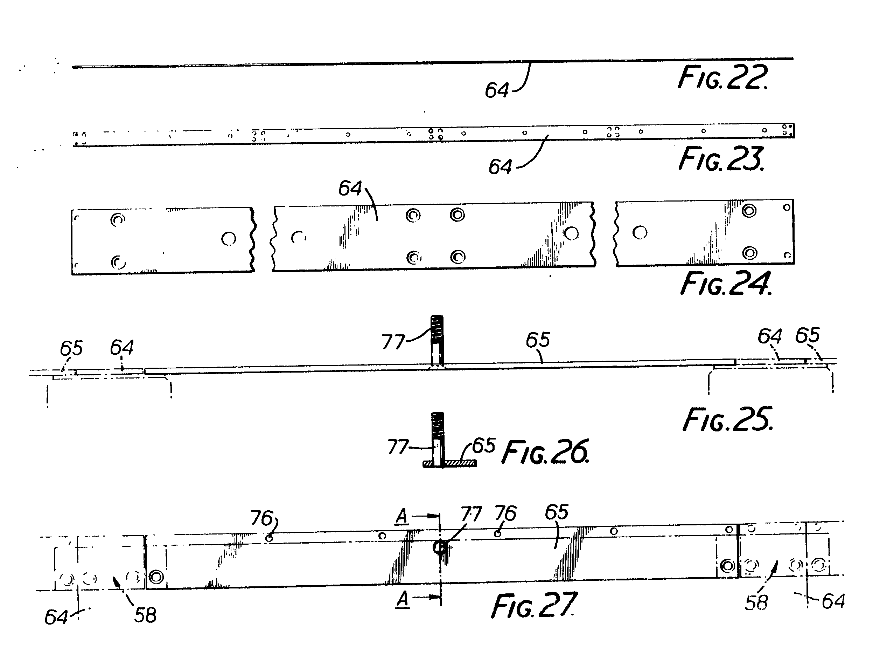

Figure 16 is a view on C in Figure 20;

Figure 17 is a view on B in Figure 20;

Figure 18 is a view on D in Figure 21;

Figure 19 is a section of A—A in Figure 18;

Figure 20 shows the detail at X in Fig. 13;

Figure 21 shows the detail at Y in Figure 13;

Figure 22 shows a base plate;

Figure 23 is a plan view of the base plate;

Figure 24 is an enlarged view of the base plate;

Figure 25 shows an end circumferential base plate;

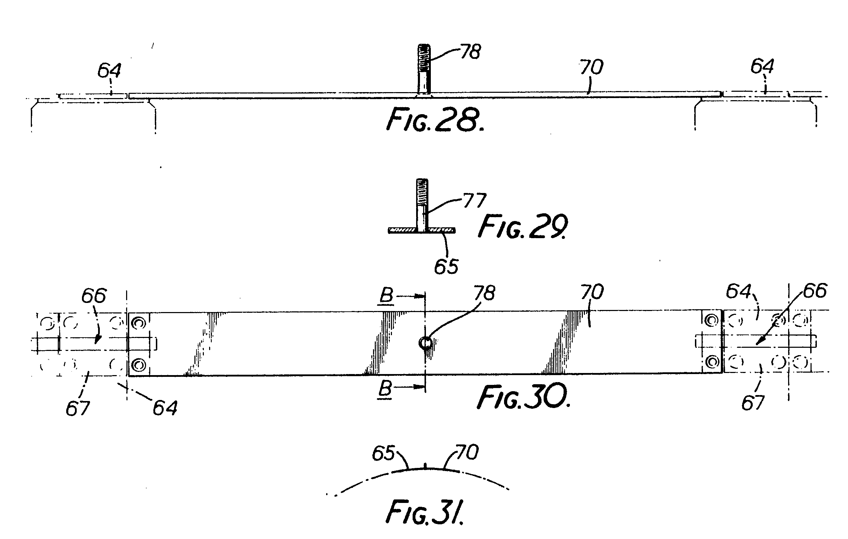

Figure 26 is a section on A—A in Figure 27;

Figure 27 is a plan view of the end circumferential base plate;

Figure 28 shows an intermediate circumferential base plate;

Figure 29 is a section on B—B in Figure 30;

Figure 30 is a plan view of the intermediate circumferential base plate; and

Figure 31 shows the curvature profile for the end circumferential base plate shown in Figure 25 and the intermediate circumferential base plate shown in Figure 28.

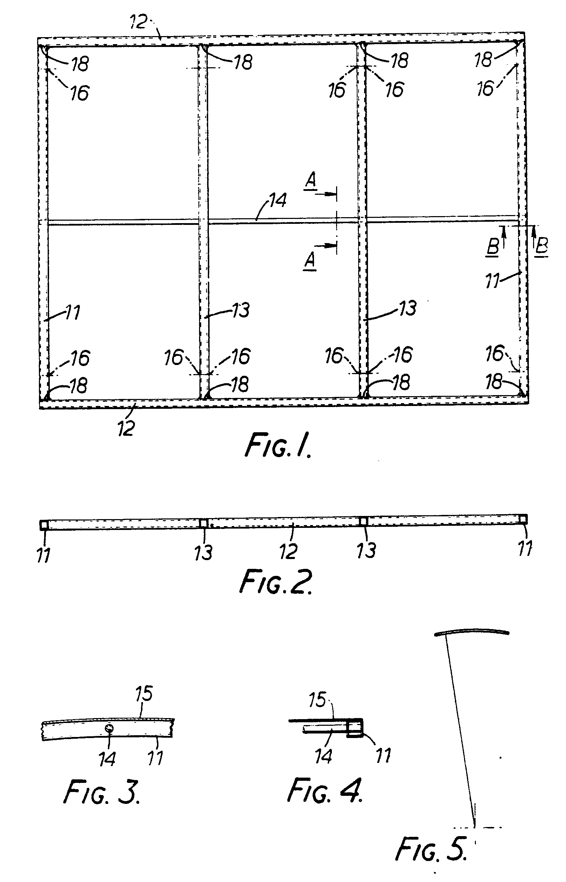

With reference now to the accompanying drawings and first with reference to Figures 1 to 5, the frame is composed of two opposite pairs of stainless steel, box-sectioned transverse side members 11 of 575 mm in length and longitudinal members 12 of 785 mm in length, two intermediate transverse stainless steel, box-sectioned members 13 and a longitudinal, stainless steel rod member 14 passing through bores in the intermediate members 13 and bores in the inner walls of the side members 11 to abut the inside of the outer walls of these members.

The box-section ends of the side members 12 are left open to drain water from the members, and the members 11 and 13 are provided with vent holes 16 for a similar purpose.

The members 11 and 13 are curved to a radius of 1533 mm as indicated in Figure 5 before welding to the members 12. The welds 18 are finished clean and ground off flush on the top and bottom of the frame and all sharp edges and burrs are removed.

The frame is then mounted in a suitable jig (not shown) and an adhesive applied in a continuous band to the whole of the convex surface of the frame. A piece of stainless steel duplex 18/20 and 35 woven wire cloth 15 larger than the frame is then clamped along its four edges and stretched over the convex surface of the frame with the warps of the cloth extending longitudinally of the frame, the fabric being tensioned under a substantial load in its warp and weft directions. The adhesive is then allowed or caused to cure or set. The adhesive penetrates the weave of the cloth and forms a continuous band of adhesive around the frame 11, 11, 12, 12 each sub-frame 11, 12, 12, 13 and the sub-frame 12, 13, 13, 12, so that in effect each wire of the fabric is embedded in, and individually held in tension by, the adhesive band.

It is to be understood that any suitable adhesive may be used which will bond stainless steel to stainless steel and at the same time withstand the environmental conditions to be encountered in use of the panel in a micro-straining unit and that the adhesive would be cured or caused to set under the manufacturers recommended conditions.

The adhesive used in the present example is an anaerobic adhesive manufactured by Locktite Limited, a British Company. The adhesive has a setting time of about 10 to 15 minutes at ambient temperature. This adhesive has the further advantage that it can be removed from the frames by treating the frames with a hot caustic solution which enables frames to be recovered.

Instead of pre-curving the members 11, 13 the frame may be welded-up using straight members 11, 13 to form the frame, and the fabric 15 is attached to one side of the frame using adhesive, all as previously described. The frame members 11, 13 are then bent to the required curvature so further tensioning the fabric wefts to a small degree, the tensioned fabric still being stretched on the convex side of the frame.

The invention may be applied to the production of micro-straining panels comprising, instead, a polyester fabric using a suitable adhesive.

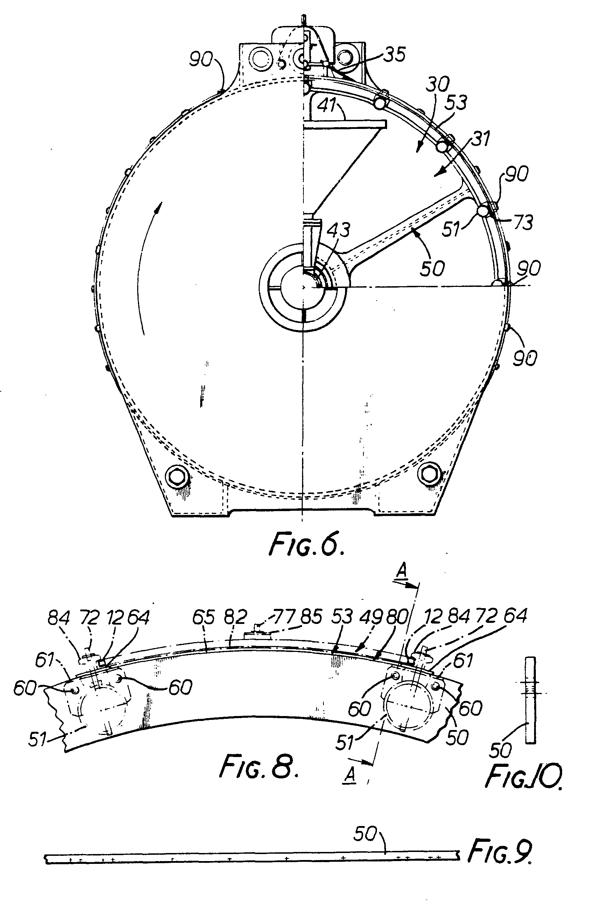

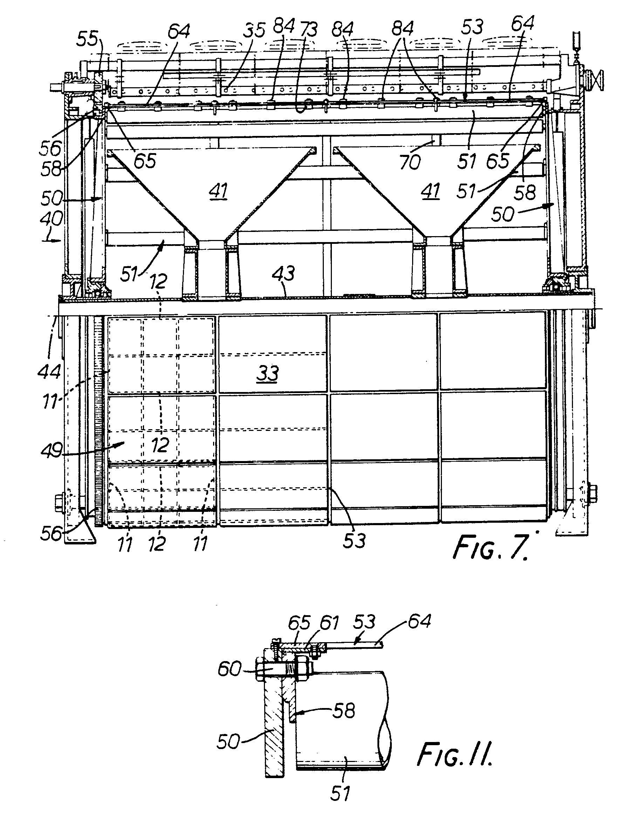

With reference to the Figures 6 to 31, the micro-straining unit comprises a revolving drum 30 into which water to be strained or purified is caused to flow at one open end 31 of the drum, the water then passing through a fabric filtering screen 33 cladding the periphery of the drum to the outside of the drum 30 and composed of sixty-four framed panels 49 of the fabric as described with reference to Figs. 1 to 5. The screen is continuously washed clean of suspended solids, organisms and other materials filtered out by the screen by means of water jets or water sprays 35 directed onto the outside of the screen 33 at the top of the drum 30 above the free surface 40 of the flow, the solids and other materials washed off the screen being collected by the hoppers 41 inside the rotating drum, the hoppers exhausting continuously through a stationary pipe 43 arranged along the rotational axis 44 of the drum.

Each panel 49 has its longitudinal frame side members 12 disposed axially of the drum and its curved frame side members 11 disposed circumferentially of the drum.

The drum 30 comprises a pair of spoked rings 50, one at each end, sixteen rigid, axially extending, round sectioned, drive transmitting tubular members 51 interconnecting the rings 50 and a windowed, sheet-form structure 53 to the outside of which the panels 49 are removably clamped by clamping means later to be described.

The drum is driven from one end *via* a pinion 55 which engages with a toothed gear wheel 56 carried by the spoked ring 50 at the water inlet end of the drum. The members 51 have welded-on, drum support, end securing members 58 seen in Figures 8, 11, 13, 15, 16, 17 and 20 bolted to the spoked rings 58, each by a pair of bolts 60. These members comprise platform plates 61 to which are bolted longitudinal and end circumferential base plates 64 and 65. The members 51 further have three welded-on drum support, intermediate securing members 66 seen in Figures 13, 15, 18, 19 and 21 comprising platform plates 67 to which are bolted longitudinal and intermediate circumferential base plates 64 and 70. The members 51 still further have, between each adjacent pair of drum support securing members, three spaced apart, welded-on clamping studs 72 seen in Figures 13, 14 and 15, carrying drum support platform blocks 73 for supporting longitudinal base plates 64, the studs 72 forming parts of the clamping means for the panels 49 hereinbefore referred to.

The end circumferential base plates 65 are also bolted along their length to the spoked rings 58, as at 76 (see Figures 12 and 27). The end circumferential base plates have welded-on clamping studs 77 positioned half way along their length.

The intermediate circumferential base plates 70 likewise have welded-on clamping studs 78 positioned half way along their length.

The end circumferential base plates 65 and the intermediate circumferential base plates are rolled to the radius of the inner surface of the side members 11 of the panels 49.

The longitudinal and circumferential base plates together form the windowed, sheet-form structure 53 having window openings 80 (see Figure 8) corresponding in number to the number of panels 49, the window openings 80 being of a size only a little less than that of the panels 49 and the inner surfaces of the side members 11 and 12 of the panels 49 being clamped to the sheet-form structure 53 with the intervention of flat sealing strips 82 (see for example Figure 14), one panel covering over each window opening 80.

The panels are removably clamped in position with T and inverted L-sectioned clamping members 84 and 85 which are positioned on the studs 72 and 78 and the studs 76 respectively, and clamping nuts 90 screwed onto the studs.

In as far the windowed, outer surface of the sheet-form structure 53 is right cylindrical and conformed accurately to the curvature of the panels, the panels are clamped to the structure 53 without distortion which might otherwise alter the predetermined tensioning of the fabric of the panels. Furthermore, the straight sides of the panels are clamped to the members 51 and the rigid frames of the panels are, therefore, rigidly supported from the drive members each along two opposite sides, so that the windowed sheet-form structure 53 is largely relieved of water forces applied to the panels.

Also, the drive to the drum structure at the gear wheel 56 is transmitted through the drum structure by the members 51 and the windowed sheet-form structure 53 is relieved of the driving forces which might otherwise tend to distort the panels.

Accordingly, the micro-straining fabric of the panels is maintained under even, predetermined tension in use of the unit as desired.

The members 51 being of round section are of streamline shape and tend to move smoothly through the water as the drum structure is revolved. Water is free to flow between the members 51 and the sheet-form structure 53 so that churning of the water at the inside face of the filtering fabric of the panels is avoided, the hydraulic forces are reduced and filtering flow is improved.

By removing its clamping nuts 90 and clamping members 84, 85 or 84 any panel 49 may readily be removed and replaced from the outside of the drum structure without draining down the water, and this may be achieved with semi-skilled labour.

By increasing or reducing the number of rings of intermediate circumferential base plates 70 and fittings therefor, the drum 30 may be lengthened or shortened whilst still using standard sized panels 49 covering the window openings 80. The structure described is, therefore, adaptable to suit micro-straining units of different sizes and to convert existing units using parts as detailed in Figures 8 to 31 of the accompanying drawings.

The panels may readily be replaced *in situ* without draining down the micro-straining unit and with relatively unskilled labour.

The panels 49 as described with reference to Figures 1 to 5 of the accompanying drawings have their fabric wires substantially uniformly tensioned within their elastic limit in a uniform, part-cylindrical surface under a high degree of permanent tension which significantly reduces the flexing of the fabric and improves the fatigue life of the individual wires in use of the panels and, therefore, the life of the fabric. In the specific example described the fabric is tensioned in its warp and weft directions under a load of 10 to 25 Newtons per cm. By evenly tensioning the strands of the fabric, the filtering flow is improved.

## Claims

1. A micro-straining fabric panel (49) comprising a rigid frame (11, 12, 13, 14) having micro-fabric (15) attached to the frame by means of adhesive characterized in that the micro-fabric (15) is held stretched on one side of the frame in both its warp and weft directions and is adhesively united to the whole of its supporting surface of said one side of the frame by means of an uninterrupted band of adhesive extending along the whole of the supporting surface whereby each individual warp and weft of the micro-fabric is embedded in the adhesive and is held thereby under a predetermined tension within its elastic limit at least between its ends

2. A panel as claimed in claim 1 in which the frame is curved in one direction to fit with a cylindrical revolving drum (30) and the micro-fabric is stretched on and adhered to the convex side of the frame.

3. A panel as claimed in claim 1 or 2 in which the micro-fabric is stretched on the frame with equal loading in its warp and weft directions.

4. A panel as claimed in any preceding claim in which the warps and wefts of the micro-fabric are substantially tensioned and in the case of the warps, to about one third of their breaking strain.

5. A panel as claimed in any preceding claim in which the frame has an opposite pair of longitudinally extending straight parallel sides (12), and the warps of the micro-fabric extend longitudinally of the frame.

6. A panel as claimed in any preceding claim having a frame comprising two opposite pairs of box-sectioned side members (11, 12), two intermediate, transverse, box-sectioned members (13) and a longitudinal rod member (14) passing through bores in the intermediate members (13) and bores in the inner walls of the transverse side members (11) to abut the inside of the outer walls of the transverse side members, the box-sectioned ends of one of the pairs of side members being left open for the drainage of water and the other pair of side members being provided with water drainage holes (16) in their side walls.

7. A micro-straining unit for water purification comprising a rigid, skeletal, cylindrical drum structure (50, 51, 53) having panels (49) each as claimed in any preceding claim removably clamped to the outside thereof thereby to form a drum (30), each panel (49) having the other side of its frame (11, 12) clamped all round to sealing surfaces of the drum structure of a shape corresponding to the shape of the surfaces at said other side of the frame (11, 12) of the panel.

8. A micro-straining unit as claimed in claim 7 in which the drum structure comprises spoked rings (50), one at each end, a plurality of rigid, axially extending drive transmitting members (51) interconnecting the rings, the drive transmitting members being spaced inwardly from the periphery of the drum structure and carrying outwardly thereof on spacing members (58, 66) positioned at discrete, spaced apart locations along the drive transmitting members, a windowed sheet-form structure (53) presenting on the outside thereof said sealing surfaces of the drum structure, said other sides of said panels (49) being clamped to the sealing surfaces each along an opposite pair of straight sides (12) of the panel, by clamping forces transmitted to the drive transmitting members (51) through further ones (73) of said spacing members.

9. A micro-straining unit as claimed in claim 8 in which said drive transmitting members (51) are of streamlined shape in cross-section.

10. A micro-straining unit as claimed in claim 8 or 9 in which said window openings (80) are of a size only a little less than said panels.

## Patentansprüche

1. Mikrofilterrahmen (49), enthaltend einen steifen Rahmen (11, 12, 13, 14) der mit einem Filtertuch (15) durch Kleben bespannt ist, dadurch gekennzeichnet, daß das Filtertuch (15) an einer Seite des Rahmens in Schuß- und Kettfadenrichtung gestreckt durch Kleben mit der ganzen tragenden Fläche der einen Rahmenseite verbunden ist, und zwar mit Hilfe eines ununterbrochen durchlaufenden Klebbandes, das sich über die ganze tragende Fläche erstreckt, und daß hierdurch jeder einzelne Schuß- und Kettfaden des Filtertuches in Kleber eingebettet und somit zumindest zwischen seinen Enden unter einer vorbestimmten Zugspannung steht, die innerhalb der Elastizitätsgrenze liegt.

2. Mikrofilterrahmen nach Anspruch 1, dadurch gekennzeichnet, daß der Rahmen in eine Richtung gebogen ist, um auf einer zylindrischen Siebtromel (30) befestigt werden zu können, und daß das Filtertuch auf der konvexen Seite des Rahmens gespannt und festgeklebt ist.

3. Mikrofilterrahmen nach Anspruch 1 oder 2, dadurch gekennzeichnet, daß das Filtertuch in Schuß- und Kettfadenrichtung mit gleicher Spannung gestreckt ist.

4. Mikrofilterrahmen nach den vorstehenden Ansprüchen, dadurch gekennzeichnet, daß die Schuß- und Kettfäden des Filtertuchs im wesentlichen gedehnt und im Falle der Kettfäden bis zu einem Drittel der Reißkraft belastet sind.

5. Mikrofilterrahmen nach den vorstehenden Ansprüchen, dadurch gekennzeichnet, daß der Rahmen ein entgegengesetztes Paar von längserstreckten geraden parallelen Seiten (12) hat und daß die Kettfäden des Filtertuchs in Längsrichtung des Rahmens verlaufen.

6. Mikrofilterrahmen nach den vorstehenden Ansprüchen, dadurch gekennzeichnet, daß der Rahmen zwei entgegengesetzte Paare von hohlkastenförmigen Profilen (11, 12), zwei dazwischenliegende Hohlkasten-Traversen (13) und eine längs verlaufende Strebe (14) aufweist, die durch Löcher in der Traverse und Löcher in der Innenwand der Profile verläuft, um an der Außenwand der Profile auzustoßen, daß die hohlen Enden eines Paares von Profilen zwecks Ablauf von Wasser offengelassen sind, und daß das andere Paar mit Ablauföffnungen in ihren Seitenwänden versehen ist.

7. Mikrofiltereinrichtung für die Wasserreinigung, enthaltend eine steife, zylindrische gitterartige Trommelstruktur (50, 51, 53), die mit Filterrahmen (49) nach den vorstehenden Ansprüchen belegt ist, wobei die Filterrahmen lösbar an der Außenseite angeklemmt sind und dadurch eine Filtertrommel (30) bilden, gekennzeichnet dadurch, daß jeder Filterrahmen (49) mit seiner anderen Seite entlang der ganzen dichtenden Oberfläche der Trommelstruktur angeklemmt ist, wobei die dichtende Fläche der Fläche auf der anderen Seite des Filterrahmens (11, 12) entspricht.

8. Mikrofilterreingung nach Anspruch 7, dadurch gekennzeichnet, daß die Trommelstruktur Speichenräder (50), jeweils eines am Ende der Trommelstruktur, und eine Vielzahl von steifen, axial verlaufenden, antriebsübertragenden Gliedern (51) aufweist, die die Speichenräder miteinander verbinden, wobei die antriebsübertragenden Glieder nach innen gegenüber dem Außenumfang der Trommelstruktur versetzt sind und außen Distanzstücke (58, 66) an verschiedenen beabstandeten Stellen tragen, auf denen eine gefensterte Streifenstruktur (53) angebracht ist, deren Außenseite die Dichtflächen der Trommelstruktur darstellt, wobei die Filterrahmen (49) mit ihrer anderen Seite auf die Dichtflächen gespannt sind, und zwar entlang einem entgegengesetzen Paar gerader Seiten (12) des Filterrahmens mittels Spannkräften, die auf die antriebsübertragenden Glieder (51) durch weitere Distanzstücke (73) übertragen werden.

9. Mikrofilterreinigung nach Anspruch 8, dadurch gekennzeichnet, daß die antriebsübertragenden Glieder (51) im Querschnitt ein strömungsgünstiges Profil haben.

10. Mikrofilterreinigung nach Anspruch 8 oder 9, dadurch gekennzeichnet, daß die Fensteröffnungen (80) der Streifenstruktur im Lichten nur wenig kleiner sind als die der Filterrahmen.

**Revendications**

1. Corps de filtre microporeux (49) contenant un corps raide (11, 12, 13, 14) recouvert d'un tissus filtrant (15) collé dessus, caractérisé en ce que le tissus filtrant (15), étiré d'un côté du corps en direction de trame et de fil de chaîne est lié à toute la surface portante de l'un des côtés du corps moyennant l'utilisation de colle, à savoir à l'aide d'un ruban adhésif continu qui s'étend sur toute la surface portante et caractérisé en ce que de cette façon chacun des fils de trame et chaque fil de chaîne du tissus filtrant est enrobé de colle et ainsi soumis à une tension de traction, au moins entre ses extrémités, qui se trouve à l'intérieur de la limite d'élasticité.

2. Corps de filtre microporeux selon revendication 1, caractérisé en ce que le corps est courbé dans une direction afin de pouvoir être fixé sur un cribleur cylindrique (30), et caractérisé en ce que le tissus filtrant est tendu et fixé par colle sur le côté convexe du corps.

3. Corps de filtre microporeux selon revendications 1 et 2, caractérisé en ce que le tissue filtrant est étire avec la méme tension en direction de trame comme en direction de fil de chaîne.

4. Corps de filtre microporeux selon les revendications précédentes, caractérisé en ce que les fils de trame et les fils de chaîne du tissus filtrant sont fondamentalement étirés et que les fils de trame du tissus filtrant sont chargés jusqu'à un tiers de leur résistance à la rupture.

5. Corps de filtre microporeux selon les revendications précédentes, caractérisé en ce que le corps a une paire opposée de côtés parallèles étendus en direction longitudinale (12) et que les fils de chaîne du tissus filtrant sont orientés en direction longitudinale du corps.

6. Corps de filtre microporeux selon les revendications précédentes, caractérisé en ce que le corps a deux paires opposées de profils en forme de caisson (11, 12) deux traverses de caisson entreposées et une contre-fiche (14) qui passe par des trous dans la traverse et dans la paroi intérieure de profils pour toucher la paroi extérieure des profils, caractérisé en ce que les extrémités creuses de profils restent ouvertes afin de rendre possible l'écoulement d'eau, et caractérisé en ce que l'autre paire est pourvue de trous d'évacuation dans ses parois latérales.

7. Dispositif du filtre microporeux pour l'épuration d'eau contenant une structure de cribleur rigide cylindrique et ressemblant à un grillage (50, 51, 53), garni de corps de filtre (49) selon les revendications précédentes, caractérisé en ce que les corps de filtre sont serrés détachablement contre la paroi extérieure de sorte qu'ils forment un seul cribleur (30), caractérisé en ce que que chacun des corps de filtre (49) est serré contre toute la surface étanche de la structure de cribleur avec son côté opposé, en quoi la surface étanche correspond à la surface de l'autre côté du corps de filtre (11, 12).

8. Nettoyage du filtre microporeux selon revendication 7, caractérisé en ce que la structure du cribleur présente des roues à rayons (50), dont toujours une à l'extrémité de la structure de cribleur, et un grand nombre d'éléments raides, axiaux et transmetteurs de propulsion (51) qui lient les roues à rayons entre elles, en quoi les éléments transmettreurs de propulsion sont déplacés vers l'intérieur par rapport à la circonférence extérieure de la structure de cribleur et que les pièces d'écartement (58, 66) à l'extérieur ont une fonction d'appui à quelques points réclamés, sur lesquels on a fixé une structure de bandes pourvue de fenêtres (53) dont le côté extérieur représente les surfaces étanches de la structure de cribleur, en quoi les corps de filtre (49) sont serrés sur les surfaces étanches avec leur côté opposé, à savoir, le long d'une paire opposé de côtés droits (12) du corps de filtre moyennant les forces de serrage transmises aux autres éléments transmetteurs de propulsion (51) à l'aide d'autres pièces d'écartement.

9. Nettoyage de filtre selon revendication 8, caractérisé en ce que les éléments transmetteurs de propulsion (51) ont un profil propice à l'écoulement en coup horizontale.

10. Nettoyage de filtre selon revendications 8 et 9, caractérisé en ce que les ouvertures de fenêtres (80) de la structure de bandes ne sont pas beaucoup plus petites à l'intérieur que les corps de filtre.

FIG. I.

FIG. 2.

FIG. 3.

FIG. 4.

FIG. 5.

1

FIG. 6.

FIG. 8.

FIG. 10.

FIG. 9.

FIG. 7.

FIG. 11.

EP 0 126 653 B1

76      76      77

FIG. 12.

64    65                                              64  65

58  72   72   72   66              66              66        51   58

X                                                                    X
61          67   Y        67   Y        67   Y        61

FIG. 13.

49    82
11
64                        12

FIG. 14.
12
73                        11
51
53

66              66    E        66              51

58 61 72    72    67        67   FIG. 15.    67        61   58

FIG. 16.

FIG. 17.

FIG. 18.

FIG. 19.

FIG. 20.

FIG. 21.

Fig.22.

Fig.23.

Fig.24.

Fig.25.

Fig.26.

Fig.27.

FIG. 28.

FIG. 29.

FIG. 30.

FIG. 31.